# EUROPÄISCHE PATENTSCHRIFT

(11) **EP 4 104 699 B1**
(45) Veröffentlichungstag und Bekanntmachung des Hinweises auf die Patenterteilung: **31.01.2024**
(21) Anmeldenummer: 22000157.2
(22) Anmeldetag: 15.06.2022
(51) Int. Cl.: A41D 31/02, A41D 31/06, A41D 31/08, A62B 17/00, B32B 5/02, B32B 5/26

(54) **SCHUTZBEKLEIDUNGSSTÜCK**
PROTECTIVE CLOTHING
VÊTEMENT DE PROTECTION

(30) Priorität: 17.06.2021 DE 102021115724
(43) Veröffentlichungstag der Anmeldung: 21.12.2022
(73) Patentinhaber: Hubert Schmitz GmbH, 52525 Heinsberg (DE)
(72) Erfinder: Schmitz, Hubert, 52525 Heinsberg (DE)
(74) Vertreter: Bauer, Dirk

(56) Entgegenhaltungen:
- GB-A- 2 281 019
- US-B2- 8 522 368
- US-B2- 10 286 234

## Beschreibung

Die Erfindung betrifft ein Schutzbekleidungsstück gemäß dem Oberbegriff des Anspruchs 1.

Schutzbekleidungsstücke sind für den Schutz von Leib und Leben einer das Schutzbekleidungsstück tragenden Person enorm wichtig. Bekannt sind solche Schutzbekleidungsstücke beispielsweise für Einsatzkräfte der Feuerwehr oder des Katastrophenschutzes zum Schutz gegen Feuer und Hitze oder für den Motorsport zum Schutz gegen Verletzungen beispielsweise durch Stürze oder Kollisionen. Die das Schutzbekleidungsstück tragende Person ist dabei nicht nur vor außergewöhnlichen Einwirkungen, beispielsweise einem Unfall geschützt, sondern auch bei alltäglichen Arbeiten.

Hierbei bedürfen insbesondere exponierte Stellen eines guten Schutzes. Diese exponierten Stellen umfassen beispielsweise Knie, Schultern oder Ellenbogen und werden von der die Schutzbekleidungsstücke tragenden Person viel bewegt. Auch solche Stellen des Körpers, an denen besonders verletzungsanfällige beziehungsweise wichtige Organe liegen, beispielsweise der Brustbereich mit dem darunterliegenden Herz, der Wirbelbereich oder der Genitalbereich, bedürfen eines besonderen Schutzes.

Besondere Wichtigkeit hat ein Schutz vor thermischen Belastungen, beispielsweise Hitze und/oder Kälte, oder mechanischen Belastungen, beispielsweise Schlägen oder Stößen. Dieser Schutz vor thermischen Belastungen wird auch als thermische Isolation bezeichnet beziehungsweise dadurch erreicht. Darüber hinaus ist auch ein Schutz vor Nässe erforderlich. Hierbei kann das Schutzbekleidungsstück durch Nässe sowohl von außen, beispielsweise in Form von Regen und/oder Spritzwasser (Löschwasser), als auch von innen, beispielsweise in Form von Schweiß, -insbesondere, wenn dieser nach einem Verdampfen an einem anderen Ort als der der Entstehung kondensiert - belastet werden.

Außerdem ist es beispielsweise denkbar, dass die Einsatzkräfte der Feuerwehr auch mit angelegten Schutzbekleidungsstücken laufen oder knien können müssen. Es ist daher verständlich, dass neben dem Schutz auch Ansprüche an Passform oder Tragekomfort gestellt werden. Insbesondere solche exponierten Stellen, die viel bewegt werden, beispielsweise Gelenke, haben hohe Anforderungen an das Schutzbekleidungsstück. Einerseits soll das Schutzbekleidungsstück eine gute Passform aufweisen und andererseits eine Beweglichkeit der Person trotz des aufgrund der Schutzanforderungen grundsätzlich recht hohen Gewichts und der vergleichsweise großen Steifheit so wenig wie möglich beeinträchtigen. Außerdem soll der Schutz durch das Schutzbekleidungsstück möglichst gut sein.

### Stand der Technik

Ein derartiges Schutzbekleidungsstück, insbesondere in Form einer Schutzjacke oder einer Schutzhose, weist einen Mehrlagenaufbau auf, der von außen nach innen betrachtet einen Oberstoff, eine erste Membran, eine Isolierschicht, eine zweite Membran und einen Futterstoff umfasst. Hierbei ist die erste Membran vollflächig mit der Isolierschicht verbunden und bildet mit dieser einen Membran-Isolier-Verbund. Außerdem ist die zweite Membran vollflächig mit dem Futterstoff verbunden und bildet mit diesem einen Membran-Futter-Verbund.

Derartige Schutzbekleidungsstücke sind dem Stand der Technik bereits in vielfältiger Ausgestaltung als bekannt zu entnehmen.

Beispielsweise ist der europäischen Patentanmeldung EP 2 117 369 A1 ein Kleidungsstück als bekannt zu entnehmen, das eine äußere Lage, eine Isolierschicht und eine innere Lage aufweist. Hierbei umfasst die äußere Lage einen Schichtstoff aus einem Textil, wobei dieses an ein Barrierematerial gebunden ist und wobei der Schichtstoff atmungsaktiv, das heißt zumindest teilweise luftdurchlässig, ist. Weiterhin umfasst die innere Lage ein luftdurchlässiges Textil. Außerdem ist vorgesehen, dass die Isolierschicht zwischen dem Barrierematerial und der inneren Lage angeordnet ist.

Weiterhin ist beispielsweise der europäischen Patentanmeldung EP 2 334 207 A1 eine Lagenstruktur, insbesondere zur Herstellung von Bekleidung, als bekannt zu entnehmen. Die Lagenstruktur umfasst wenigstens eine erste Lage und eine zweite Lage, wobei die zweite Lage wenigstens eine Barriereschicht aufweist, die wasserdampfdurchlässig und flüssigkeitsundurchlässig ist. Weiterhin umfasst die Lagenstruktur eine Verbindungssubstanz, die zwischen der Barriereschicht und der ersten Lage angeordnet ist, um eine Verbindung zwischen der Barriereschicht und der ersten Lage zu schaffen. Hierbei ist die Verbindungssubstanz in Teilbereichen zwischen der Barriereschicht und der ersten Lage angeordnet, sodass die Verbindungssubstanz nicht gleichmäßig verteilt und nur an bestimmten Stellen auf der Oberfläche der ersten und/oder zweiten Lage angeordnet ist. Mit anderen Worten bedeckt die Verbindungssubstanz nicht die gesamte Oberfläche der ersten und/oder zweiten Lage.

Außerdem ist der europäischen Patentanmeldung EP 2 967 174 A1 ein derartiges Schutzbekleidungsstück als bekannt zu entnehmen. Dieses umfasst eine äußere Schicht, eine erste Membran, eine Isolierschicht, und eine zweite Membran. Die erste Membran ist luftdurchlässig und weist flüssiges Wasser ab. Die zweite Membran ist luftundurchlässig, flüssigkeitsdicht und wasserdampfdurchlässig. Hierbei ist die erste Membran näher an der äußeren Schicht als die zweite Membran angeordnet. Außerdem ist die Isolierschicht zwischen der ersten Membran und der zweiten Membran angeordnet.

Das Dokument GB2281019 offenbart ein Schutzbekleidungsstück mit den Merkmalen des Oberbegriffs des Anspruchs 1.

Nachteilig bei dem vorgenannten Stand der Technik ist, dass die Schutzbekleidungsstücke entweder insgesamt einen vergleichsweise hohen Schutz aufweisen und somit vergleichsweise schwer sind oder einen vergleichsweise schwachen Schutz aufweisen und somit vergleichsweise leicht sind. Schutzbekleidungsstücke mit vergleichsweise hohem Schutz sind außerdem entsprechend dicker und schränken daher eine Beweglichkeit der das Schutzbekleidungsstück tragenden Person ein und lassen sie dadurch ermüden. Werden die Schutzbekleidungsstücke leichter, d. h. mit einem geringeren Flächengewicht des verwendeten Lagenaufbaus, ausgeführt, leidet darunter die Tauglichkeit bei extremen Belastungen, insbesondere Hitzebelastungen. Es ist daher nachteilig, diese Eigenschaften nicht entsprechend den Anforderungen kombinieren beziehungsweise anpassen zu können.

### Aufgabe

Es ist Aufgabe der vorliegenden Erfindung, die Nachteile des Stands der Technik zu beseitigen und ein Schutzbekleidungsstück bereitzustellen, dass sich sowohl durch die Erfüllung hoher Schutzanforderungen als auch durch einen guten Tragekomfort auszeichnet.

### Lösung

Diese Aufgabe wird erfindungsgemäß durch ein Schutzbekleidungsstück mit den Merkmalen des Anspruchs 1 gelöst. Vorteilhafte Ausgestaltungen ergeben sich aus den Unteransprüchen.

Erfindungsgemäß ist vorgesehen, dass in mindestens einem Starkschutzbereich des Schutzbekleidungsstücks ein erster Membran-Isolier-Verbund vorhanden ist, der eine Isolierschicht mit einer ersten Dicke besitzt, und in mindestens einem anderen Bereich des Schutzbekleidungsstücks ein zweiter Membran-Isolier-Verbund vorhanden ist, der eine Isolierschicht mit einer zweiten Dicke besitzt, wobei die erste Dicke größer als die zweite Dicke ist.

Eine das Schutzbekleidungsstück tragende Person kann durch deren Mehrlagenaufbau geschützt werden. Die Person kann das Schutzbekleidungsstück beispielsweise in Form einer Schutzjacke und/oder Schutzhose tragen. Außerdem denkbar ist das Schutzbekleidungsstück als Overall, Poncho oder Haube. Oberseitig, mithin als äußere Schicht, weist das Schutzbekleidungsstück einen Oberstoff auf, welcher vorzugsweise aus einem robusten Textil, insbesondere mit Fäden aus Meta- und/oder Para-Aramid, hergestellt ist. Auf diese Weise ist der Oberstoff besonders widerstandsfähig, beispielsweise gegen scharfe Kanten oder Gegenstände, sowie sehr hitzebeständig. Unterhalb des Oberstoffes weist das Schutzbekleidungsstück eine erste Membran und eine Isolierschicht auf, welche zusammengenommen einen Membran-Isolier-Verbund bilden. Hierbei sind die erste Membran und die Isolierschicht vollflächig miteinander verbunden, beispielsweise durch Kleben. Unterhalb davon weist das Schutzbekleidungsstück eine zweite Membran und einen Futterstoff auf, welche zusammengenommen einen Membran-Futter-Verbund bilden. Analog zu dem Membran-Isolier-Verbund sind auch die zweite Membran und der Futterstoff vollflächig miteinander verbunden.

Mit anderen Worten bildet der Membran-Futter-Verbund eine innere Lage des Schutzbekleidungsstück, wobei der Futterstoff beispielsweise zumindest mittelbar auf der das Schutzbekleidungsstück tragenden Person, typischerweise einer unter dem Schutzbekleidungsstück getragenen Unterwäsche, aufliegt. Wieder mit anderen Worten hat zumindest der Futterstoff des Membran-Futter-Verbunds zumindest mittelbaren Kontakt zu der Haut der das Schutzbekleidungsstück tragenden Person.

Sowohl bei dem Isolierstoff als auch bei dem Futterstoff kann es sich um ein Abstandsgestrick oder -gewirk oder ein Vlies- oder Filzmaterial handeln. Weiterhin denkbar ist auch der Einsatz eines Gewebes für den Isolierstoff beziehungsweise Futterstoff.

Gemäß der erfindungsgemäßen Ausgestaltung ist nun vorgesehen, unterschiedliche Bereiche des Schutzbekleidungsstückes unterschiedlich auszugestalten. Dazu umfasst das Schutzbekleidungsstück mindestens einen sogenannten Starkschutzbereich. In der Praxis hat sich gezeigt, dass bestimmte Bereiche der das Schutzbekleidungsstück tragenden Person besonders durch Hitzeeinwirkung stark beansprucht werden beziehungsweise besonders schützenswert sind. Während beispielsweise eine Verletzung, beispielsweise durch übermäßige Hitzebelastung, im Wadenbereich üblicherweise zumindest im Wesentlichen unbedenklich ist, kann dieselbe Verletzung im Brustbereich, insbesondere im Bereich des Herzens, lebensgefährlich sein. Es ist daher verständlich, dass unterschiedliche Bereiche der Person unterschiedlich stark geschützt werden sollten beziehungsweise müssen. Diese Bereiche werden als Starkschutzbereiche identifiziert und in entsprechender Weise bei dem Schutzbekleidungsstück berücksichtigt.

Durch die erfindungsgemäße Ausgestaltung ist es in diesem Zusammenhang möglich, gezielt nur die Starkschutzbereiche besonders zu schützen. Dazu wird eine Dicke der Isolierschicht in den Starkschutzbereichen entsprechend angepasst, d. h. gegenüber den übrigen Bereichen erhöht. Mit anderen Worten ist die Isolierschicht in den Starkschutzbereichen dicker als in anderen Bereichen des Schutzbekleidungsstücks, die keinen Starkschutz erfordern. Beispielsweise kann die Isolierschicht im Brustbereich dicker sein als im Unterbauchbereich oder Unterarmbereich. Mit anderen Worten ist die das Schutzbekleidungsstück tragende Person folglich im Brustbereich besser geschützt als im Unterbauch- oder Unterarmbereich. Hierdurch kann ein Gesamtgewicht des Schutzbekleidungsstücks deutlich reduziert werden, da die Isolierschicht nur dort dick ausgestaltet wird, wo es nötig ist. Weiterhin erhöht sich durch das erfindungsgemäße Schutzbekleidungsstück der Tragekomfort enorm, da dieses durch eine Gewichtseinsparung einerseits leichter und durch eine Materialeinsparung andererseits beweglicher, d. h. flexibler im Sinne einer einfacheren Verformbarkeit, ist. Hierdurch ergibt sich der Vorteil, dass das Schutzbekleidungsstück besonders hohen Schutz bietet und gleichzeitig besonders komfortabel ist.

Gemäß einer besonders vorteilhaften Ausgestaltung der Erfindung ist vorgesehen, dass der mindestens eine Starkschutzbereich ein Schulterbereich und/oder Oberarmbereich und/oder Brustbereich einer Schutzjacke und/oder ein Oberschenkelbereich und/oder Kniebereich und/oder Unterschenkelbereich einer Schutzhose ist. In der Praxis hat sich gezeigt, dass die vorgenannten Bereiche besonders stark beansprucht werden beziehungsweise besonders schützenswert sind. Die Anordnung der Starkschutzbereiche in zumindest einem der vorgenannten Bereiche ergibt sich der Vorteil, dass die das Schutzbekleidungsstück tragende Person besonders umfassend geschützt ist.

Ein weiterer Vorteil ergibt sich dann, wenn die erste Membran eine luftdurchlässige, flüssiges Wasser abweisende Membran ist. Hierdurch können von außen auftreffendes Wasser, beispielsweise in Form von Regen und/oder Spritz-bzw. Löschwasser, nicht in das Schutzbekleidungsstück eindringen und dieses somit nicht durchnässen. Mit anderen Worten ist das Schutzbekleidungsstück besonders robust und kann in vielfältigen Situationen eingesetzt werden. Gleichermaßen kann von außen dennoch Luft einströmen, sodass für die das Schutzbekleidungsstück tragende Person ein Kühlungseffekt bereitgestellt werden kann. Hierdurch ergibt sich der Vorteil, dass das Schutzbekleidungsstück besonders komfortabel sowie anstrengungsarm und vielseitig einsetzbar ist.

In einer weiteren besonders vorteilhaften Ausgestaltung der Erfindung ist vorgesehen, dass die zweite Membran eine luftundurchlässige, flüssigkeitsdichte, wasserdampfdurchlässige Membran ist. Diese zweite Membran ist üblicherweise näher zu der das Schutzkleidungsstück tragenden Person angeordnet. Mit anderen Worten befindet sich die Membran zumindest im Wesentlichen in der Nähe der Haut der das Schutzbekleidungsstück tragenden Person. Insbesondere während einer Benutzung, also wenn die Person das Schutzbekleidungsstück in Form der Schutzjacke und/oder Schutzhose angelegt hat, schwitzt die Person aufgrund körperlicher Anstrengung und/oder Stress. Dies gilt insbesondere während körperlich besonders belastender und/oder längerer Einsätze. Das Schutzbekleidungsstück kann beispielsweise auch in Form des Overalls und/oder Ponchos und/oder der Haube eingesetzt werden. Dadurch, dass die zweite Membran wasserdampfdurchlässig ist, wird ermöglicht, dass der verdampfte Schweiß von der Haut abgeleitet werden und durch das Schutzbekleidungsstück hindurch nach außen gelangen kann. Hierdurch ergibt sich für die das Schutzbekleidungsstück tragende Person ein Kühlungseffekt, sodass diese besonders gut regenerieren kann. Außerdem wird verhindert, dass Flüssigkeit durch die Membran tritt, da diese flüssigkeitsdicht ausgestaltet ist. Die Isolierschicht kann also nicht durch flüssigen Schweiß durchnässen, so dass die Isolierwirkung nicht beeinträchtigt wird. Hierdurch ergibt sich der Vorteil, dass das Schutzbekleidungsstück besonders körperschonend und gesundheitsfördernd einsetzbar ist, d. h. die hohe Schutzwirkung auch bei belastenden Einsätzen beibehalten bleibt.

Ein weiterer Vorteil ergibt sich dann, wenn eine Kontaktlinie, insbesondere eine Nahtlinie, an der ein Zuschnittteil des ersten Membran-Isolier-Verbunds an ein Zuschnittteil des zweiten Membran-Isolier-Verbunds stößt, von einem Zuschnittteil des Oberstoffs und/oder einem Zuschnittteil des Membran-Futter-Verbundes überdeckt wird. In der Praxis hat sich gezeigt, dass die Kontaktlinie, insbesondere in Form einer Nahtlinie, besonders anfällig für äußere Einwirkungen sind. In diesem Zusammenhang ist beispielsweise Nässe zu nennen, welche durch die Nahtlinie eindringen kann. Es ist daher gemäß dieser Ausgestaltung vorgesehen, die Kontaktlinie beziehungsweise Nahtlinie zwischen Zuschnittteilen der verschiedenen Isolierverbünde durch den Oberstoff abzudecken. Mit anderen Worten ist die Kontaktlinie durch den Oberstoff geschützt. Hierdurch ergibt sich der Vorteil, dass das Schutzbekleidungsstück besonders robust und langlebig ist. Auch kann hierdurch die Zahl der Zuschnittteile des Oberstoffs minimiert werden, d. h. muss trotz der erfindungsgemäßen Differenzierung in der Isolierschichtdicke jedenfalls nicht erhöht werden, so dass die Beibehaltung der klassischen Zuschnitt-Architektur möglich ist.

Weiterhin ist in einer vorteilhaften Ausgestaltung vorgesehen, dass jede Kontaktlinie, insbesondere Nahtlinie, an der ein Zuschnittteil des Membran-Futter-Verbundes an ein anderes Zuschnittteil des Membran-Futter-Verbundes stößt, mit einer Kontaktlinie, insbesondere Nahtlinie, zusammenfällt, an der ein Zuschnittteil des Membran-Isolier-Verbundes an ein anderes Zuschnittteil des Membran-Isolier-Verbundes stößt. Mit anderen Worten kann gewissermaßen eine "Auflösung" des Membran-Isolier-Verbundes unabhängig von dem Membran-Futter-Verbund angepasst werden. Der Membran-Isolier-Verbund kann demzufolge In Bezug auf den Membran-Futter-Verbund zumindest im Wesentlichen beliebig gestückelt werden, insbesondere derart, dass deren jeweilige Kontaktlinien zusammenfallen. geschützt. Vorteilhafterweise ist gemäß dieser Ausgestaltung das Schutzbekleidungsstück besonders individuell und bedarfsgerecht.

In einer weiteren besonders vorteilhaften Ausgestaltung ist vorgesehen, dass jede Kontaktlinie, insbesondere Nahtlinie, an der ein Zuschnittteil des Oberstoffes an ein anderes Zuschnittteil des Membran-Futter-Verbundes stößt, mit einer Kontaktlinie, insbesondere Nahtlinie, zusammenfällt, an der ein Zuschnittteil des Membran-Isolier-Verbundes an ein anderes Zuschnittteil des Membran-Isolier-Verbundes stößt. Auf diese Weise können die Kontaktlinien beziehungsweise Nahtlinien auf ein Minimum reduziert werden. Hierdurch ergibt sich der Vorteil, dass das Schutzbekleidungsstück besonders stabil ist.

Gemäß einer weiteren besonders vorteilhaften Ausgestaltung ist vorgesehen, dass der Oberstoff ein Gewebe ist, das zumindest Anteile eines Meta-Aramids und/oder Para-Aramids und/oder anderer inhärent flammhemmender, aromatischer Polymerfasern enthält und auf seiner dem Membran-Isolier-Verbund zugewandten Innenseite mit einem Gitter aus Aramidfäden versehen ist. Dieses Gitter kann in seiner Erscheinungsform beispielsweise an ein Rechteck, insbesondere an ein Quadrat, angelehnt sein beziehungsweise erinnern. Das heißt, dass Eckpunkte des Gitters zumindest im Wesentlichen beispielsweise ein Rechteck, insbesondere ein Quadrat bilden, wobei dessen Seiten nicht zwangsläufig gerade sein müssen. In der Praxis hat sich gezeigt, dass insbesondere Meta-Aramid beziehungsweise Para-Aramid oder eine Kombination aus diesen als Oberstoff besonders gut geeignet sind. Hierbei handelt es sich um sehr robuste Materialien. Das innenseitige Gitter aus Aramidfäden bietet besonderen Schutz vor mechanischen Belastungen und somit zusätzliche Sicherheit. Beispielsweise bietet das Schutzbekleidungsstück gemäß dieser besonders vorteilhaften Ausgestaltung eine besonders gute Schnittfestigkeit, Reißfestigkeit sowie Weiterreißfestigkeit. Hierdurch ergibt sich der Vorteil, dass die das Schutzbekleidungsstück tragende Person besonders gut geschützt ist.

In einer weiteren besonders vorteilhaften Ausgestaltung ist vorgesehen, dass die Isolierschicht einen Vliesstoff und/oder ein Gestrick und/oder ein Gewirk aus Polymerfasern, insbesondere Aramidfasern, aufweist oder daraus besteht. In der Praxis hat sich gezeigt, dass der Vliesstoff aus Polymerfasern eine besonders günstige Merkmalskombination von Leichtigkeit und Isolierfähigkeit aufweist. Außerdem handelt es sich bei Vliesstoff aus Polymerfasern um ein geläufiges und kostengünstiges Material. Hierdurch ergibt sich der Vorteil, dass das Schutzbekleidungsstück besonders gut isoliert ist und gleichzeitig besonders leicht ist sowie kostengünstig hergestellt werden kann.

Ein weiterer Vorteil ergibt sich dann, wenn eine Anzahl der Zuschnittteile des Membran-Isolier-Verbundes größer ist als eine Anzahl der Zuschnittteile des Oberstoffs und/oder eine Anzahl der Zuschnittteile des Membran-Futter-Verbundes. Mit anderen Worten werden die Membran-Isolier-Verbünde mittels deren Anzahl der Zuschnittteile individuell auf Anforderung in dem jeweiligen Bereich (Starkschutzbereich oder nicht) angepasst. In diesem Zusammenhang ist es beispielsweise denkbar, dass der Membran-Isolier-Verbund in ergonomisch komplizierten Bereichen, in denen kleine Krümmungsradien und eine stark strukturierte Topographie vorliegen, beispielsweise dem Schulterbereich, aus vielen Zuschnittteilen hergestellt wird. Hierdurch wird erreicht, dass die Isolierschicht genau auf den jeweiligen Bereich des Körpers angepasst ist. Vorteilhafterweise ist durch diese Ausgestaltung ein besonders bedarfsgerechtes Schutzbekleidungsstück realisierbar.

### Ausführungsbeispiel

Die Erfindung ist nachstehend anhand eines Ausführungsbeispiels, das in den Figuren dargestellt ist, näher erläutert. Es zeigt:
- Fig. 1:: eine schematische Ansicht eines erfindungsgemäßen Schutzbekleidungsstücks in Form einer Schutzjacke;
- Fig. 2:: Schnittmuster von Zuschnittteilen für die Schutzjacke;
- Fig. 3:: eine schematische Ansicht eines erfindungsgemäßen Schutzbekleidungsstücks in Form einer Schutzhose;
- Fig. 4:: Schnittmuster von Zuschnittteilen für die Schutzhose; und
- Fig. 5:: eine schematische Schnittansicht zweier Mehrlagenaufbauten.

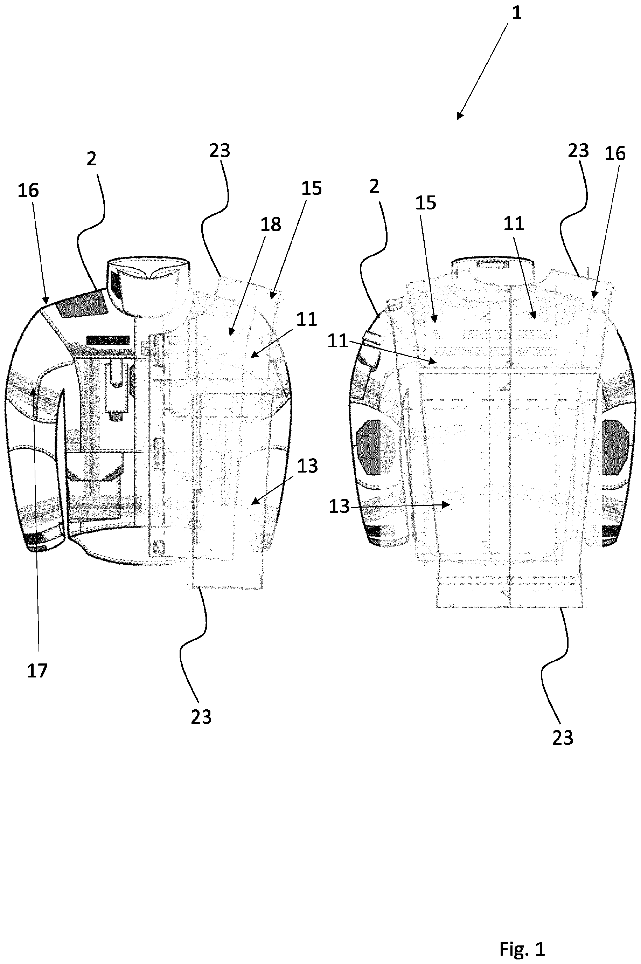

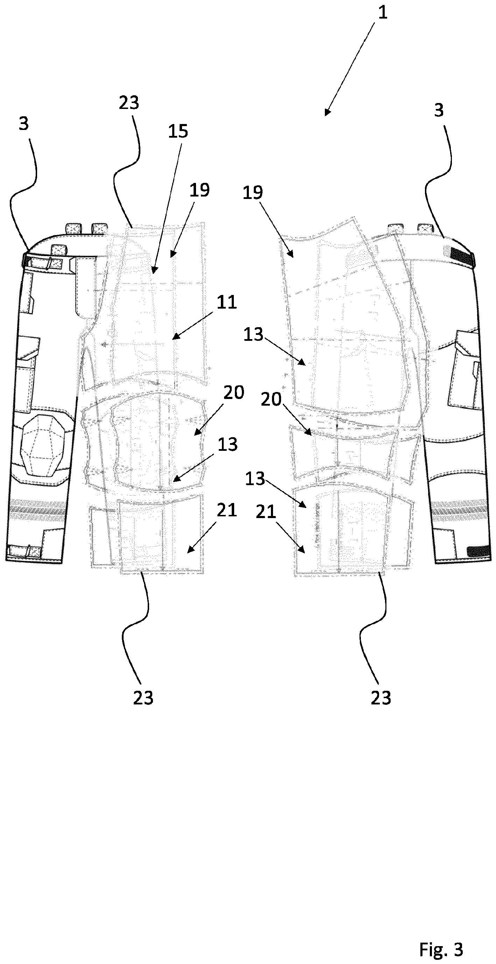

Figur 1 zeigt in einer schematischen Ansicht ein erfindungsgemäßes Schutzbekleidungsstück 1 in Form einer Schutzjacke 2. Hierbei ist die Schutzjacke 2 links in Figur 1 von vorne und rechts in Figur 1 von hinten gezeigt. Figur 3 zeigt in einer schematischen Ansicht ein erfindungsgemäßes Schutzbekleidungsstück 1 in Form einer Schutzhose 3. Hierbei ist die Schutzhose 3 links in Figur 3 von vorne und rechts in Figur 3 von hinten gezeigt.

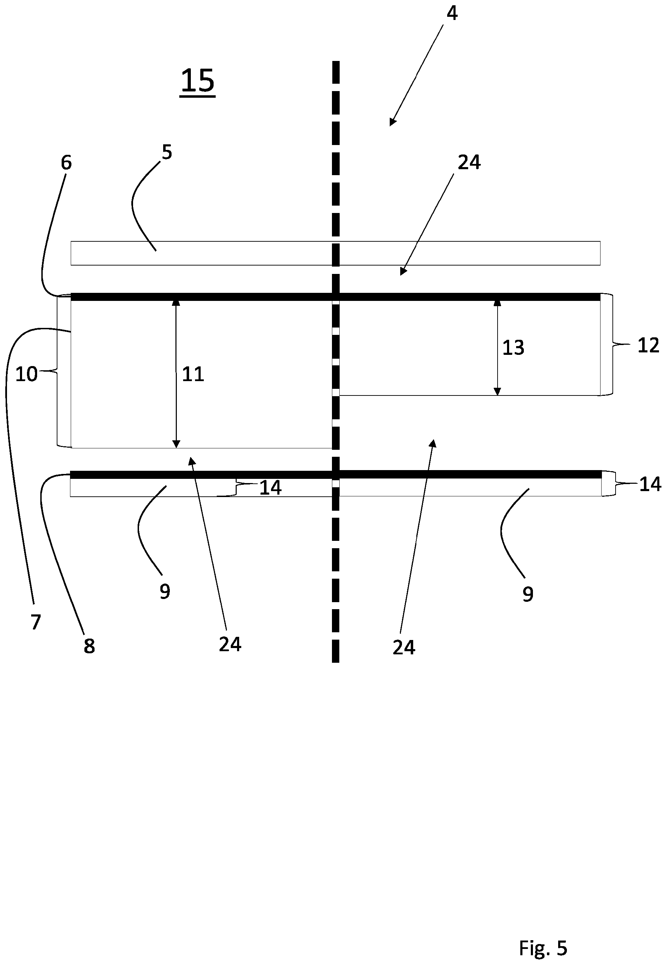

Das Schutzbekleidungsstück 1, beispielsweise die Schutzjacke 2 und/oder die Schutzhose 3, weist einen Mehrlagenaufbau 4 auf, der von außen nach innen betrachtet mehrere Schichten umfasst. Der Mehrlagenaufbau 4 umfasst einen Oberstoff 5, eine erste Membran 6, eine Isolierschicht 7, eine zweite Membran 8 und einen Futterstoff 9. Dies ist besonders deutlich in Figur 5 erkennbar, in der eine schematische Schnittansicht des Mehrlagenaufbaus 4 dargestellt ist. Hierbei ist die erste Membran 6 vollflächig mit der Isolierschicht 7 verbunden und bildet mit dieser einen Membran-Isolier-Verbund 10, 12. Außerdem ist die zweite Membran 8 vollflächig mit dem Futterstoff 9 verbunden und bildet mit diesem einen Membran-Futter-Verbund 14.

Gemäß Figur 5 weist der Mehrlagenaufbau 4 jeweils zwischen dem Oberstoff 5 und dem Membran-Isolier-Verbund 10, 12 sowie zwischen dem Membran-Isolier-Verbund 10, 12 und dem Membran-Futter-Verbund 14 Luft 24 auf. Dies ist dadurch begründet, dass die durch die Luftspalte 24 getrennten Schichten, nämlich einerseits Oberstoff 5 und Membran-Isolier-Verbund 10, 12 sowie andererseits Membran-Isolier-Verbund 10, 12 und Membran-Futter-Verbund 14, zumindest nicht unmittelbar miteinander verbunden sind.

Die Isolierschicht 7 weist vorliegend einen Vliesstoff aus Polymerfasern auf beziehungsweise besteht daraus. In der Praxis hat sich gezeigt, dass der Vliesstoff aus Polymerfasern eine besonders günstige Merkmalskombination von Leichtigkeit und Isolierfähigkeit aufweist. Der Futterstoff 9 ist vorliegend beispielsweise ein Abstandsgestrick oder -gewirk oder ein Vlies- oder Filzmaterial. Bei dem Futterstoff 9 kann es sich außerdem um ein Gewebe handeln.

Das Schutzbekleidungsstück 1 bietet der dieses tragenden Person Schutz beispielsweise vor mechanischen Einwirkungen, beispielsweise Schlägen oder spitzen Gegenständen, vor thermischen Einflüssen, beispielsweise Hitze oder Kälte, und Schutz vor Nässe, beispielsweise in Form von Regen oder Spritzwasser. In der Praxis hat sich gezeigt, dass nicht alle Bereiche des Körpers gleichmäßig belastet beziehungsweise gefährdet sind, insbesondere im Hinblick auf die Hitzebelastung. In diesem Zusammenhang ist es beispielsweise verständlich, dass ein Brustbereich 18 mit dem darunterliegenden Herzen bei einer Verletzung, beispielsweise durch eine übermäßige Hitzebelastung, schlimmer verletzt wird, als wenn dieselbe Verletzung in einer Wade auftritt. Daher werden Starkschutzbereiche 15 identifiziert, beispielsweise ein Schulterbereich 16, ein Oberarmbereich 17, der Brustbereich 18, ein Oberschenkelbereich 19, ein Kniebereich 20 und ein Unterschenkelbereich 21. Diese Starkschutzbereiche 15 kennzeichnen Bereiche des Körpers, die besonders anfällig für Verletzungen oder besonders schutzwürdig sind oder anhand empirischer Ergebnisse als Bereiche mit besonders hoher Hitzebelastung identifiziert wurden.

Es ist daher vorgesehen, dass das Schutzbekleidungsstück 1 Starkschutzbereiche 15 aufweist, innerhalb derer die Isolierschicht 7 des entsprechenden Membran-Isolier-Verbunds 10 eine erste Dicke 11 aufweist. Diese erste Dicke 11 der Isolierschicht 7 innerhalb des Starkschutzbereichs 15 ist größer als eine zweite Dicke 13 der Isolierschicht 7 des zweiten Membran-Isolier-Verbundes 12, der außerhalb der Starkschutzbereiche 15 angeordnet ist. Dies ist besonders deutlich in Figur 5 erkennbar, in der links der erste Membran-Isolier-Verbund 10 und rechts der zweite Membran-Isolier-Verbund 12 dargestellt ist. Es ist deutlich erkennbar, dass die erste Dicke 11 des ersten Membran-Isolier-Verbundes 10 größer ist als die zweite Dicke 13 des zweiten Membran-Isolier-Verbundes 12. Der restliche Aufbau ist in beiden gegenübergestellten Ausgestaltungen vorliegend zumindest im Wesentlichen gleich.

Das zumindest im Wesentlichen vollständig hergestellte Schutzbekleidungsstück 1 weist vorliegend für den Membran-Isolier-Verbund 12 ein Flächengewicht im Bereich von 130 ± 10 g/m² beziehungsweise für den Membran-Isolier-Verbund 10 im Bereich von 210 ± 15 g/m² auf. Mit anderen Worten sind die Starkschutzbereiche 15 dadurch charakterisiert, dass innerhalb dieser die Isolierschicht 7 besonders dick ist, mithin deren erste Dicke 11 größer ist als die zweite Dicke 13 der Isolierschichten 7 außerhalb der Starkschutzbereiche 15. Wieder mit anderen Worten ist die das Schutzbekleidungsstück 1 tragende Person besonders gut in den Starkschutzbereichen 15 geschützt, da dort die Isolierschicht 7 besonders dick ist und somit besonders gut vor äußeren Einwirkungen schützt.

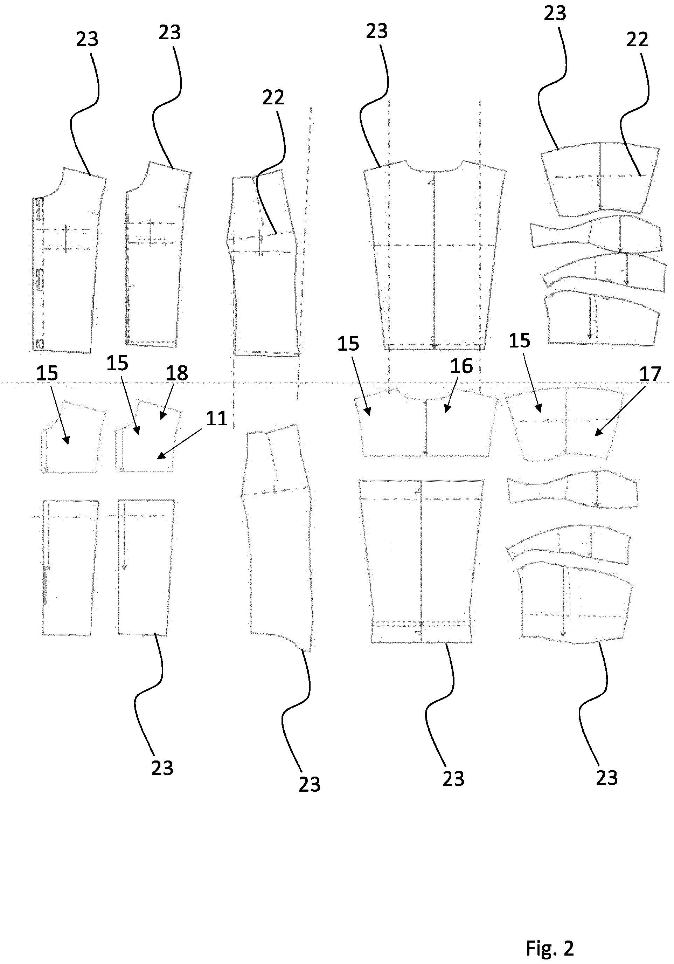

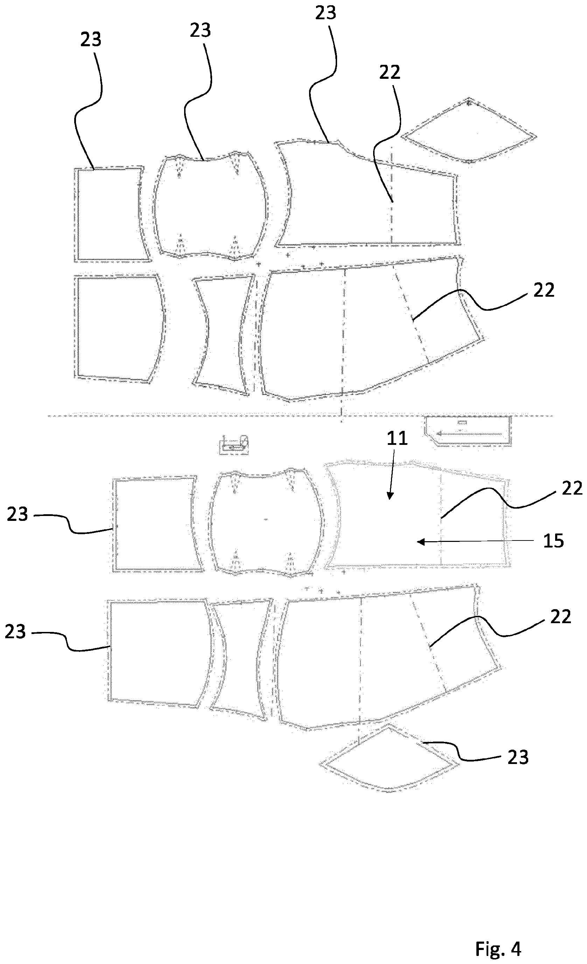

Zur Herstellung des Schutzkleidungsstückes 1 werden daher Zuschnittteile 23 hergestellt, welche miteinander vernäht werden. Figur 2 zeigt ein Schnittmuster von Zuschnittteilen 23 für die Schutzjacke 1 und Figur 4 zeigt ein Schnittmuster von Zuschnittteilen 23 für die Schutzhose 3. Hierbei ist erkennbar, dass es unter den Zuschnittteilen 23 solche gibt, die in einem Starkschutzbereich 15 des Schutzkleidungsstückes angeordnet werden beziehungsweise sind. Dies geht insbesondere in Zusammenschau der zusammengehörigen Figuren 1 und 2 sowie der Figuren 3 und 4 hervor. Mit anderen Worten wird für Zuschnittteile 23, die in den Starkschutzbereichen 15 angeordnet werden beziehungsweise sind, die Isolierschicht 7 mit der ersten Dicke 11 gewählt. Wieder mit anderen Worten weisen Zuschnittteile 23 für den Starkschutzbereich 15 eine dickere Isolierschicht 7 auf, als Zuschnittteile 23 anderer Bereiche.

Wie insbesondere in den Figuren 2 und 4 erkennbar ist, weisen die Zuschnittteile 23 jeweils mindestens eine Kontaktlinie 22, vorliegend in Form einer Nahtlinie, auf. Wie in Zusammenschau mit den Figuren 1 und 3 hervorgeht, ist es vorliegend vorgesehen, die Kontaktlinien 22 korrespondierender Zuschnittteile 23 möglichst nebeneinander beziehungsweise zumindest im Wesentlichen überdeckend oder zumindest teilweise überlappend anzuordnen. Mit anderen Worten werden korrespondierende Zuschnittteile 23 derart aneinander angeordnet, dass deren Kontaktlinien 22 miteinander verbunden werden können, beispielsweise durch Vernähen. Anschließend können diese Kontaktlinien 22 wie vorliegend zusätzlich durch den Oberstoff 5 abgedeckt und somit durch diesen geschützt werden.

### Bezugszeichenliste

- 1: Schutzbekleidungsstück
- 2: Schutzjacke
- 3: Schutzhose
- 4: Mehrlagenaufbau
- 5: Oberstoff
- 6: erste Membran
- 7: Isolierschicht
- 8: zweite Membran
- 9: Futterstoff
- 10: erster Membran-Isolier-Verbund
- 11: erste Dicke
- 12: zweiter Membran-Isolier-Verbund
- 13: zweite Dicke
- 14: Membran-Futter-Verbund
- 15: Starkschutzbereich
- 16: Schulterbereich
- 17: Oberarmbereich
- 18: Brustbereich
- 19: Oberschenkelbereich
- 20: Kniebereich
- 21: Unterschenkelbereich
- 22: Kontaktlinie
- 23: Zuschnittteil
- 24: Luft

## Patentansprüche

1. Schutzbekleidungsstück (1) mit einem Mehrlagenaufbau (4), der von außen nach innen betrachtet folgende Schichten aufweist:
- einen Oberstoff (5)
- eine erste Membran (6)
- eine Isolierschicht (7)
- eine zweite Membran (8) und
- einen Futterstoff (9),
wobei die erste Membran (6) vollflächig mit der Isolierschicht (7) verbunden ist und mit dieser einen Membran-Isolier-Verbund (10) bildet, und die zweite Membran (8) vollflächig mit dem Futterstoff (9) verbunden ist und mit diesem einen Membran-Futter-Verbund (14) bildet, **dadurch gekennzeichnet, dass** in mindestens einem Starkschutzbereich (15) des Schutzbekleidungsstücks (1) ein erster Membran-Isolier-Verbund (10) vorhanden ist, der eine Isolierschicht (7) mit einer ersten Dicke (11) besitzt, und in mindestens einem anderen Bereich des Schutzbekleidungsstücks (1) ein zweiter Membran-Isolier-Verbund (12) vorhanden ist, der eine Isolierschicht (7) mit einer zweiten Dicke (13) besitzt, wobei die erste Dicke (11) größer als die zweite Dicke (13) ist.

2. Schutzbekleidungsstück (1) nach Anspruch 1 **dadurch gekennzeichnet, dass** der mindestens eine Starkschutzbereich (15)
- ein Schulterbereich (16) und/oder Oberarmbereich (17) und/oder Brustbereich (18) einer Schutzjacke (2) und/oder
- ein Oberschenkelbereich (19) und/oder Kniebereich (20) und/oder Unterschenkelbereich (21) einer Schutzhose (3) ist.

3. Schutzbekleidungsstück (1) nach Anspruch 1 oder 2 **dadurch gekennzeichnet, dass** die erste Membran (6) eine luftdurchlässige, flüssiges Wasser abweisende Membran ist

4. Schutzbekleidungsstück (1) nach einem der Ansprüche 1 bis 3 **dadurch gekennzeichnet, dass** die zweite Membran (8) eine luftundurchlässige, flüssigkeitsdichte, wasserdampfdurchlässige Membran ist

5. Schutzbekleidungsstück (1) nach einem der Ansprüche 1 bis 4 **dadurch gekennzeichnet, dass** eine Kontaktlinie (22), insbesondere eine Nahtlinie, an der ein Zuschnittteil (23) des ersten Membran-Isolier-Verbunds (10) an ein Zuschnittteil (23) des zweiten Membran-Isolier-Verbunds stößt (12), von einem Zuschnittteil (23) des Oberstoffs (5) und/oder einem Zuschnittteil (23) des Membran-Futter-Verbundes (14) überdeckt wird

6. Schutzbekleidungsstück (1) nach einem der Ansprüche 1 bis 5 **dadurch gekennzeichnet, dass** jede Kontaktlinie (22), insbesondere Nahtlinie, an der ein Zuschnittteil (23) des Membran-Futter-Verbundes (14) an ein anderes Zuschnittteil (23) des Membran-Futter-Verbundes (14) stößt, mit einer Kontaktlinie (22), insbesondere Nahtlinie, zusammenfällt, an der ein Zuschnittteil (23) des Membran-Isolier-Verbundes (10, 12) an ein anderes Zuschnittteil (23) des Membran-Isolier-Verbundes (10, 12) stößt.

7. Schutzbekleidungsstück (1) nach einem der Ansprüche 1 bis 5 **dadurch gekennzeichnet, dass** jede Kontaktlinie (22), insbesondere Nahtlinie, an der ein Zuschnittteil (23) des Oberstoffes (5) an ein anderes Zuschnittteil (23) des Membran-Futter-Verbundes (14) stößt, mit einer Kontaktlinie (22), insbesondere Nahtlinie, zusammenfällt, an der ein Zuschnittteil (23) des Membran-Isolier-Verbundes (10, 12) an ein anderes Zuschnittteil (23) des Membran-Isolier-Verbundes (10, 12) stößt.

8. Schutzbekleidungsstück (1) nach einem der Ansprüche 1 bis 7 **dadurch gekennzeichnet, dass** der Oberstoff (5) ein Gewebe ist, das zumindest Anteile eines Meta-Aramids und/oder Para-Aramids enthält und auf seiner dem Membran-Isolier-Verbund (10, 12) zugewandten Innenseite mit einem vorzugsweise quadratischen Gitter aus Aramidfäden versehen ist

9. Schutzbekleidungsstück (1) nach einem der Ansprüche 1 bis 8 **dadurch gekennzeichnet, dass** die Isolierschicht (7) einen Vliesstoff aus Polymerfasern aufweist oder daraus besteht.

10. Schutzbekleidungsstück (1) nach einem der Ansprüche 1 bis 9 **dadurch gekennzeichnet, dass** eine Anzahl der Zuschnittteil (23) e des Membran-Isolier-Verbundes (10,12) größer ist als eine Anzahl der Zuschnittteile (23) des Oberstoffs (5) und/oder eine Anzahl der Zuschnittteile (23) des Membran-Futter-Verbundes (14).

## Claims

1. Protective clothing item (1) having a multi-layer structure (4), which, when viewed from the outside inwards, has the following layers:
- an outer fabric (5)
- a first membrane (6)
- an insulating layer (7)
- a second membrane (8) and
- a lining material (9),
wherein the first membrane (6) is connected over the entire surface to the insulating layer (7) and forms a membrane-insulating composite (10) with this layer, and the second membrane (8) is connected over the entire surface to the lining material (9) and forms a membrane-lining composite (14) with this lining material, **characterized in that** in at least one strong protection area (15) of the protective clothing item (1) there is a first membrane-insulating composite (10) which has an insulating layer (7) having a first thickness (11), and in at least one other area of the protective clothing item (1) there is a second membrane-insulating composite (12) which has an insulating layer (7) having a second thickness (13), wherein the first thickness (11) is greater than the second thickness (13).

2. Protective clothing item (1) according to Claim 1, **characterized in that** the at least one strong protection area (15) is
- a shoulder area (16) and/or upper arm area (17) and/or chest area (18) of a protective jacket (2) and/or
- a thigh area (19) and/or knee area (20) and/or lower leg area (21) of protective trousers (3).

3. Protective clothing item (1) according to Claim 1 or 2, **characterized in that** the first membrane (6) is an air-permeable, liquid water-repellent membrane.

4. Protective clothing item (1) according to one of Claims 1 to 3, **characterized in that** the second membrane (8) is an air-impermeable, liquid-tight, water vapour-permeable membrane.

5. Protective clothing item (1) according to one of Claims 1 to 4, **characterized in that** a contact line (22), in particular a seam line, on which a cut piece (23) of the first membrane-insulating composite (10) abuts against a cut piece (23) of the second membrane-insulating composite (12), is covered by a cut piece (23) of the outer fabric (5) and/or a cut piece (23) of the membrane-lining composite (14).

6. Protective clothing (1) according to one of Claims 1 to 5, **characterized in that** each contact line (22), in particular seam line, on which a cut piece (23) of the membrane-lining composite (14) abuts against another cut piece (23) of the membrane-lining composite (14) abuts, coincides with a contact line (22), in particular seam line, on which a cut piece (23) of the membrane-insulating composite (10, 12) abuts against another cut piece (23) of the membrane-insulating composite (10, 12).

7. Protective clothing item (1) according to one of Claims 1 to 5, **characterized in that** each contact line (22), in particular seam line, on which a cut piece (23) of the outer fabric (5) abuts against another cut piece (23) of the membrane-lining composite (14) abuts, coincides with a contact line (22), in particular a seam line, at which a cut piece (23) of the membrane-insulating composite (10, 12) abuts against another cut piece (23) of the membrane-insulating composite (10, 12).

8. Protective clothing item (1) according to one of Claims 1 to 7, **characterized in that** the outer fabric (5) is a fabric which contains at least fractions of a meta-aramid and/or para-aramid and on its inner side facing the membrane-insulating composite (10, 12) is provided with a preferably square mesh made of aramid threads.

9. Protective clothing item (1) according to one of Claims 1 to 8, **characterized in that** the insulating layer (7) comprises or consists of a nonwoven material made of polymer fibres.

10. Protective clothing item (1) according to one of Claims 1 to 9, **characterized in that** a number of the cut pieces (23) of the membrane-insulating composite (10, 12) is greater than a number of the cut pieces (23) of the outer fabric (5) and/or a number of the cut pieces (23) of the membrane-lining composite (14).

## Revendications

1. Article d'habillement de protection (1) ayant une structure multicouche (4) qui présente, vue de l'extérieur vers l'intérieur, les couches suivantes :
- un tissu supérieur (5),
- une première membrane (6),
- une couche isolante (7),
- une seconde membrane (8) et
- un tissu de doublure (9),
la première membrane (6) étant connectée par toute sa surface à la couche isolante (7) et constituant avec celle-ci un composite membrane-isolant (10), et la seconde membrane (8) étant connectée par toute sa surface au tissu de doublure (9) et constituant avec celui-ci un composite membrane-doublure (14), **caractérisé en ce que**, dans au moins une zone de forte protection (15) de l'article d'habillement de protection (1), il y a un premier composite membrane-isolant (10) qui comporte une couche isolante (7) dotée d'une première épaisseur (11) et que, dans au moins une autre zone de l'article d'habillement de protection (1), il y a un second composite membrane-isolant (12) qui comporte une couche isolante (7) dotée d'une seconde épaisseur (13), la première épaisseur (11) étant supérieure à la seconde épaisseur (13).

2. Article d'habillement de protection (1) selon la revendication 1, **caractérisé en ce que** l'au moins une zone de forte protection (15) est
- une zone d'épaule (16) et/ou une zone de haut de bras (17) et/ou une zone de poitrine (18) d'une veste de protection (2) et/ou
- une zone de cuisse (19) et/ou une zone de genou (20) et/ou une zone de jambe (21) d'un pantalon de protection (3).

3. Article d'habillement de protection (1) selon la revendication 1 ou 2, **caractérisé en ce que** la première membrane (6) est une membrane perméable à l'air et déperlante.

4. Article d'habillement de protection (1) selon une des revendications 1 à 3, **caractérisé en ce que** la seconde membrane (8) est une membrane imperméable à l'air, étanche au liquide, perméable à la vapeur d'eau.

5. Article d'habillement de protection (1) selon une des revendications 1 à 4, **caractérisé en ce qu'**une ligne de contact (22), en particulier une ligne de soudure, au niveau de laquelle une pièce de découpe (23) du premier composite membrane-isolant (10) bute contre une pièce de découpe (23) du second composite membrane-isolant (12) bute, est recouverte par une pièce de découpe (23) du tissu supérieur et (5) et/ou une pièce de découpe (23) du composite membrane-doublure (14).

6. Article d'habillement de protection (1) selon une des revendications 1 à 5, **caractérisé en ce que** chaque ligne de contact (22), en particulier ligne de soudure, au niveau de laquelle une pièce de découpe (23) du composite membrane-doublure (14) bute contre une autre pièce de découpe (23) du composite membrane-doublure (14), coïncide avec une ligne de contact (22), en particulier une ligne de soudure, au niveau de laquelle une pièce de découpe (23) du composite membrane-isolant (10, 12) bute contre une autre pièce de découpe (23) du composite membrane-isolant (10, 12)

7. Article d'habillement de protection (1) selon une des revendications 1 à 5, **caractérisé en ce que** chaque ligne de contact (22), en particulier ligne de soudure au niveau de laquelle une pièce de découpe (23) du tissu supérieur (5) bute contre une autre pièce de découpe (23) du composite membrane-doublure (14) bute, coïncide avec une ligne de contact (22), en particulier une ligne de soudure, au niveau de laquelle une pièce de découpe (23) du composite membrane-isolant (10, 12) bute contre une autre pièce de découpe (23) du composite membrane-isolant (10, 12).

8. Article d'habillement de protection (1) selon une des revendications 1 à 7, **caractérisé en ce que** le tissu supérieur (5) est une toile qui contient au moins des parts de méta-aramide et/ou para-aramide et est pourvu, sur sa face intérieure tournée vers le composite membrane-isolant (10, 12), d'un grillage de préférence carré en fils d'aramide.

9. Article d'habillement de protection (1) selon une des revendications 1 à 8, **caractérisé en ce que** la couche isolante (7) présente un matériau non-tissé en fibres de polymère ou en est composée.

10. Article d'habillement de protection (1) selon une des revendications 1 à 9, **caractérisé en ce qu'**un nombre de pièces de découpe (23) du composite membrane-isolant (10, 12) est supérieur à un nombre de pièces de découpe (23) du tissu supérieur (5) et/ou un nombre de pièces de découpe (23) du composite membrane-doublure (14).
